# EUROPEAN PATENT SPECIFICATION

(11) **EP 0 278 548 B1**
(45) Date of publication and mention of the grant of the patent: **26.05.1993**
(21) Application number: 88200080.5
(22) Date of filing: 19.01.1988
(51) Int. Cl.: H04N 1/41

(54) **A method of and apparatus for coding image information**
Verfahren und Vorrichtung zur Kodierung von Bilddaten
Procédé et appareil pour la codage de données d'image

(30) Priority: 27.01.1987 NL 8700182
(43) Date of publication of application: 17.08.1988
(73) Proprietor: Océ-Nederland B.V., 5914 CC Venlo (NL)
(72) Inventor: Van Dorsselaer, Etienne Ludovicus Mathilde Emelia, NL-4565 EL Sinjansteen (NL)
(74) Representative: Hanneman, Henri W., Dr.

(56) References cited:
- US-A- 3 967 052
- US-A- 4 013 828
- US-A- 4 266 249
- PROCEEDINGS OF THE S.I.D., vol. 17/2, second quarter 1976, pages 92-101, Los Angeles, US; C.N. JUDICE: "Data reduction of dither coded images by bit interleaving"

## Description

This invention relates to a method of coding digital image information obtained by dithering of an image with a dither matrix, comprising, for at least a part of the image, combining in a predetermined order the binary dither values of the pixels compared during dithering with the same threshold value of the dither matrix to form strings and subjecting all these strings to a compression operation. The invention also relates to an apparatus for coding digital image information according to this method.

A method and apparatus of this kind are known from US-A-3 967 052. In this known method strings are formed, always for a part of the dithered image, from the binary pixel values corresponding to one and the same threshold value of the dither matrix. These strings are then compressed individually by a conventional technique, for example, by the well-known run length method in which the numbers of consecutive equal values in the strings are determined.
This method of coding leads, more particularly in the case of images having little variation in grey value, in which the pixels which correspond to one and the same threshold value of the dither matrix have similar values over relatively wide areas, to an effective reduction of the data required for storing or transmitting the particular image information concerned.

It is the object of the invention to improve the method mentioned in the preamble in such a way that a much greater reduction of the data necessary to store or transmit image information is provided.

This object is attained in that in a method according to the preamble, the compression operation comprises:
- the determination of a maximum threshold value dₘₐₓ and a minimum threshold value dₘᵢₙ of the dither matrix,
- the allocation of an individual code to each string associated with a threshold value in the range bounded by dₘᵢₙ and dₘₐₓ, and
- the allocation of at least one group code to each one of the two groups of strings associated with threshold values above or below the range bounded by dₘᵢₙ and dₘₐₓ.

Consequently, only those strings of the strings to be coded are individually coded which contain most image information, while the other strings containing less image information can be processed collectively.

The invention is based on the finding that on the one side the image information of most interest for image formation is formed by the content of the strings having the greatest pixel value variations and that on the other side the latter strings always correspond to a group of contiguous threshold values of the dither matrix. Also, the quality of the dithered image appears to be little affected when a pixel is altered in value here and there.

The collective coding of the strings associated with threshold values above or below the range bounded by dₘᵢₙ and dₘₐₓ is possible because these strings appear to consist virtually completely of a single pixel value, namely one pixel value for the strings associated with threshold values above the range bounded by dₘᵢₙ and dₘₐₓ, and the other pixel value for the strings associated with threshold values below that range. Consequently, these strings can readily be replaced by a string consisting entirely of the particular pixel value concerned. This leads to a substantial data reduction.

In an embodiment of the method according to the invention, the minimum threshold value dₘᵢₙ and the maximum threshold value dₘₐₓ are determined by reference to the number of pixels of one value and the number of pixels of the other value in the strings obtained. Consequently, the threshold value range within which the strings are coded individually is adapted dynamically to the information content of the image part to be coded, thus further considerably increasing data reduction.

In another embodiment of the method according to the invention, for allocation of the individual code to a string the standard string most similar to the string to be coded is selected from a set of standard strings and the individual code comprises an identification of the selected standard string.

This procedure itself leads to a further reduction in the number of data needed to code the string and therefore enhances the overall effect to the method. A carefully compiled set of standard strings can be considerably smaller than the number of possible strings without any noticeable impairment of image quality.

In another embodiment of the method according to the invention, the group code of the group of strings associated with threshold values above the range bounded by dₘᵢₙ and dₘₐₓ comprises an identification of dₘₐₓ and the group code of the group of strings associated with threshold values below the range bounded by dₘᵢₙ and dₘₐₓ comprises an identification of dₘᵢₙ.

A code of this kind is sufficient to indicate which strings have been coded as a group, from which it can be immediately deduced which strings have been coded individually.

The invention will be described in greater detail hereinafter with reference to the accompanying drawings wherein:
Fig. 1 represents part of an image to be coded, divided up into blocks.
Fig. 2 is a dither matrix with which the original image was dithered.
Fig. 3 represents a superblock as processed by the method according to the invention.
Fig. 4 represents a diagrammatic view of an apparatus according to the invention.

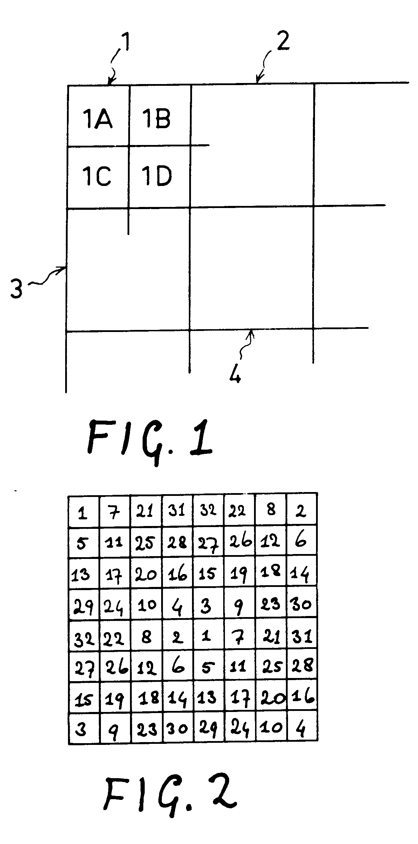

Fig. 1 represents a part, more particularly the top lefthand corner, of an image, e.g. a photograph. This image is dithered by means of the dither matrix represented in Fig. 2. To this end, the image is divided up into blocks 1A, 1B, 1C, 1D built up of picture elements or pixels, which in number and positioning per block are identical to the elements of the dither matrix. The grey level of each of the pixels is then determined, e.g. in the manner described in the above-mentioned US patent. The analog grey level of each pixel is then compared with a given threshold value which is obtained from the value of the corresponding element of the dither matrix. If the grey level is greater than said threshold value, that pixel is given the dither value 1 corresponding to a black pixel in the dithered image. If, however, the grey level is less than the said threshold value, the pixel is given the dither value 0, corresponding to a white pixel. Dithering of this kind is generally known and requires no further explanation here. See, for instance, the US patent already mentioned.

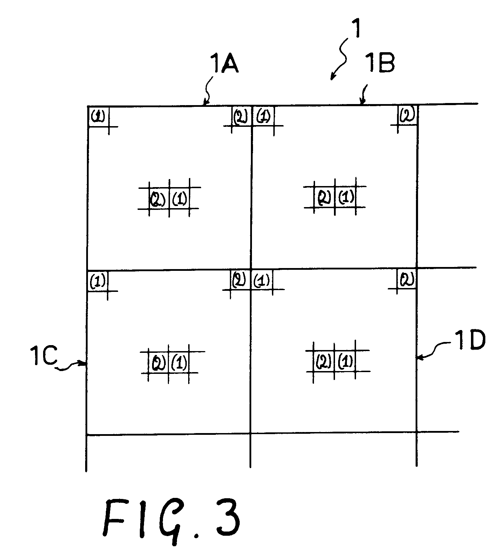

The image information is then compressed. To this end, for example, four blocks 1A to 1D are combined into a superblock 1 as represented in Fig. 3. In this Figure, the pixels compared with the threshold values "1" and "2" of the dither matrix, are indicated by (1) and (2) respectively. The pixels belonging to each given threshold value in the superblock are then collected and their dither values (0 or 1) are combined into a string in a predetermined order. Since each threshold value occurs twice in the dither matrix used, each string thus comprises eight bits, being the dither values of eight pixels. A string is determined in this way for each threshold value of the dither matrix. The dither matrix used comprises 32 different thresholds values, so that 32 strings are formed.
The number of possible different forms of a string of 8 bits is 2⁸=256. However, the image information can be coded with only a slight loss of quality with fewer bits per string. To this end, the strings are compared one by one with a set of standard strings, the standard string most similar to a string to be coded is selected from the set and a unique code associated with the selected standard string is allocated to the string to be coded.

The set of standard strings is considerably smaller than the set of all possible strings, e.g. 64 (= 2⁶). The resulting compression has a factor of 1.33 (i.e. 6 bits instead of 8 bits).
This method is based on the empirical finding that the quality of an image does not appreciably deteriorate if a pixel here and there has the wrong value.

However, the invention provides an even stronger compression mechanism. For that purpose - still for each superblock - a minimum threshold value dₘᵢₙ and a maximum threshold value dₘₐₓ are allocated and all the strings belonging to threshold values below dₘᵢₙ are converted into strings consisting completely of ones, and all the strings belonging to threshold values greater than dₘₐₓ are converted into strings consisting completely of zeroes. These two groups of strings are no longer individually coded, but as a group, by means of a code comprising the value of dₘᵢₙ and dₘₐₓ respectively.

The coded signal now contains only the following details: the value of dₘᵢₙ, the value of dₘₐₓ, and the codes of the strings coded by means of standard strings.

The method according to the invention makes use of the experience that a superblock contains far from all the grey levels, and that those grey levels that it does contain are usually situated close together. This is because a superblock is only a very small segment of the total image, and the grey level distribution in an analog image is usually low-frequency. Consequently, most strings of a superblock will consist entirely or almost entirely of identical dither values. For example, a superblock whose grey level is situated approximately in the middle of the scale will, for the low threshold values, give strings consisting completely or practically completely of ones, and, for high thresholds values, strings consisting completely or practically completely of zeroes. Only the threshold values in the middle area give strings having a considerable variation in ones and zeroes. Since the limited grey level scale in a superblock does not affect the same part of the total scale in each superblock, the threshold values required to be coded will also differ for different superblocks. Generally, however, a minimum threshold value dₘᵢₙ and a maximum threshold value dₘₐₓ can always be defined, between which the strings must be coded individually, while this is unnecessary outside the same.

The values of dₘᵢₙ and dₘₐₓ can be defined on the basis of experience concerning the information content of the average image, but it is better to determine dₘᵢₙ and dₘₐₓ separately for each superblock by reference to the distribution of the pixel values in the strings, as will be described hereinafter. Maximum compression is obtained in this way.
To this end, the strings are examined for the numbers of ones and zeroes in the order of the threshold values to which they belong. According to the above considerations, the string belonging to the lowest threshold value will practically certainly consist entirely of ones. With increasing threshold values there will always be more zeroes appearing in the strings. The value given to dₘᵢₙ is the threshold value at which the number of zeroes exceeds a predetermined number n₀. As the threshold values increase, the number of zeroes will always increase and the number of ones decrease until the strings contain only zeroes. The value selected for dₘₐₓ is the threshold value at which the number of ones falls below a predetermined number n₁.

The image information of a portrait photograph dithered by means of the matrix shown in Fig. 2 was coded in the manner described above. For this purpose the dithered image was divided up into superblocks in the size of 16 × 16 pixels. Thus each treshold value occurred eight times in each superblock.
64 standard strings were used for coding. As already discussed above, a coding of this kind gives a compression having a factor of 1.33.

For the coding with the method according to the invention the values n₀ and n₁ were set to 3. On completion of the coding the results were analyzed, showing that in each superblock on average only 5 out of the 32 strings were coded according to standard strings, so that the total data reduction proved to be 6.34, while the image quality had not appreciably deteriorated.

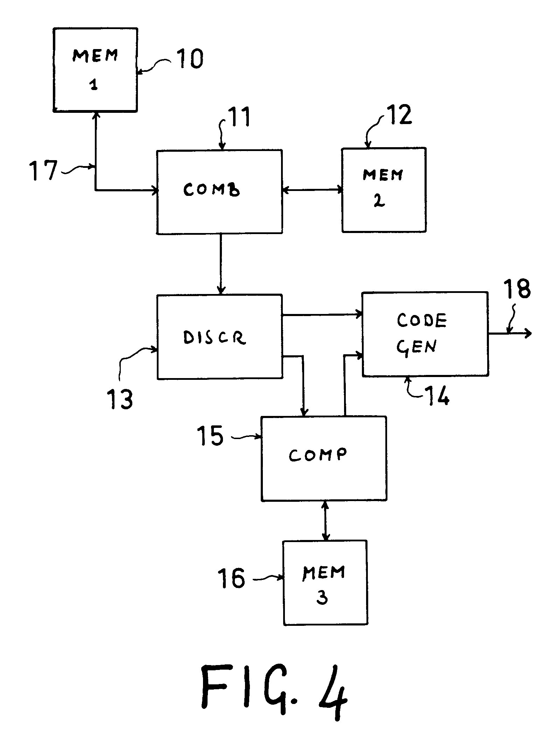

Fig. 4 diagrammatically represents an apparatus for coding image information using the method according to the invention. The apparatus comprises a first memory 10 in which the dithered image information to be coded is stored in the form of the dither values of the pixels. A combiner 11 is connected to the memory 10 via a data bus 17, to a second memory 12, in which the threshold values of the dither matrix used are stored, and to a discriminator 13. The discriminator 13 is also connected to a code generator 14 and a comparator 15, the latter being connected to the code generator 14 and to a third memory 16 in which the set of standard strings is stored with a code for each standard string. The code generator 14 has an output 18 for the coded signal, the output 18 being connectable, for example, to a memory or to a transmitting installation.

The dither values of the pixels associated with a superblock are read out by the combiner 11 from the first memory 10 and combined to form strings of dither values each associated with one of the threshold values of the dither matrix originally used in determining the dither values. To this end, the combiner 11 makes use of the data about the dither matrix in the second memory 12. These strings appear consecutively at the output of combiner 11 in ascending order of threshold values, i.e. first the string associated with the threshold value 1, then the string associated with the threshold value 2, and so on. This information is processed by the discriminator 13. As previously described, the first strings associated with low threshold values are entirely or substantially entirely in the form of ones. The number of zeroes in these strings is therefore less than the previously mentioned number n₀, but the number of zeroes rises with increasing threshold value. When the number of zeroes equals the number n₀, the discriminator 13 transmits the associated threshold value directly to the code generator 14 which defines this threshold value as dₘᵢₙ. The discriminator 13 transmits the next strings, i.e. the strings associated with the threshold values dₘᵢₙ, dₘᵢₙ + 1, dₘᵢₙ + 2 and so on, one by one to the comparator 15 where they are coded in accordance with the standard strings method. To this end, the comparator 15 compares these strings with the standard strings in its set stored in the memory 16. For each string the comparator 15 transmits to the code generator 14 the code belonging to the standard string most similar to the string found.
As the threshold values increase further, the number of ones decreases continuously and the number of zeroes increases continuously, until the number of ones becomes finally less than the number n₁ mentioned. The discriminator 13 then stops transmitting the strings to the comparator 15 and sends the particular threshold value concerned directly to the code generator 14 which defines it as dₘₐₓ. The subsequent strings are no longer coded individually.

The code generator 14 then combines the coded image data to form a code signal containing the values of dₘᵢₙ and dₘₐₓ and the codes of the coded strings and transmits this signal via the connection 18 to a memory unit or transmitting installation (not shown).
Consequently, the strings associated with a threshold value d for which holds, that d < dₘᵢₙ or d > dₘₐₓ, do not form part of the code signal, but this is perfectly acceptable since it is known that strings associated with threshold values less than dₘᵢₙ consist entirely of ones and strings associated with threshold values greater than dₘₐₓ consist entirely of zeroes.

Although the invention has been described with reference to the above example, it is not limited thereto. The skilled addressee will see that various alternative embodiments are possible without departing from the scope of the claims, for example the use of blocks and superblocks with different dimensions and of different values for n₀ and n₁, which may also differ from one another. The apparatus described can be embodied by means of discrete electronic circuits but can also have the form of programs in a computer.

## Claims

1. A method of coding digital image information obtained by dithering of an image with a dither matrix (Fig. 2), comprising, for at least a part (1) of the image, combining in a predetermined order the binary dither values of the pixels compared during dithering with the same threshold value of the dither matrix to form strings, each string of dither values thus obtained being associated with one of the threshold values of the said dither matrix, and subjecting all these strings to a compression operation, characterised in that the compression operation comprises:
- the determination of a maximum threshold value dₘₐₓ and a minimum threshold value dₘᵢₙ of the dither matrix,
- the allocation of an individual code to each string associated with a threshold value in the range bounded by dₘᵢₙ and dₘₐₓ, and
- the allocation of at least one group code to each one of the two groups of strings associated with threshold values above or below the range bounded by dₘᵢₙ and dₘₐₓ.

2. A method according to claim 1, characterised in that dₘᵢₙ and dₘₐₓ are determined by reference to the number of pixels of one binary value and the number of pixels of the other binary value in the strings obtained.

3. A method according to claim 1 or 2, characterised in that for allocation of the individual code to a string the standard string most similar to the string to be coded is selected from a set of standard strings and in that the individual code comprises an identification of the selected standard string.

4. A method according to any of the previous claims, characterised in that the group code of the group of strings associated with threshold values above the range bounded by dₘᵢₙ and dₘₐₓ comprises an identification of dₘₐₓ and in that the group code of the group of strings associated with threshold values below the range bounded by dₘᵢₙ and dₘₐₓ comprises an identification of dₘᵢₙ.

5. Apparatus for coding digital image information obtained by dithering of an image with a dither matrix, comprising
- combining means (11) for combining in a predetermined order the binary dither values of the pixels of at least a part of the image, that were compared during dithering with the same threshold value of the dither matrix into strings, each string of dither values thus obtained being associated with one of the threshold values of the said dither matrix; and
- compression means (13, 14, 15), connected to the combining means (11), for compressing all these strings, characterised in that the compression means are provided with
- discrimination means (13), connected to the combining means, for determining a maximum threshold value dₘₐₓ and a minimum threshold value dₘᵢₙ of the dither matrix; and
- coding means (14), connected to the discrimination means, for allocating an individual code to each string associated with a threshold value in the range bounded by dₘᵢₙ and dₘₐₓ and at least one group code to each one of the strings associated with threshold values above and below the range bounded by dₘᵢₙ and dₘₐₓ.

6. Apparatus according to claim 5, wherein the discrimination means (13) are provided with means for counting the number of pixels of one binary value and the number of pixels of the other binary value in the strings and are laid out for determining dₘᵢₙ and dₘₐₓ by reference to those numbers.

7. Apparatus according to claim 5 or 6, wherein the coding means (14) is provided with comparator means (15) for comparing a first string with a number of standard strings stored in a memory and for selecting from that number of standard strings the one that is most similar to the said first string, and is laid out for allocating an individual code to such a first string comprising an identification of the selected standard string.

8. Apparatus according to any of the claims 5, 6 and 7, wherein the coding means (14) is laid out for forming a group code for each of the groups of strings associated with threshold values above and below the range bounded by dₘₐₓ and dₘᵢₙ, that comprises an identification of dₘₐₓ or of dₘᵢₙ, respectively.

## Patentansprüche

1. Verfahren zum Codieren von digitalen Bilddaten, die durch Dithern eines Bildes mit einer Dithermatrix (Fig. 2) erhalten wurden, bei dem, für wenigstens einen Teil (1) des Bildes, die binären Ditherwerte der Pixel, die während des Ditherns mit demselben Schwellenwert der Dithermatrix verglichen wurden, in einer bestimmten Reihenfolge zu Ketten zusammengefaßt werden, wobei jede so erhaltene Kette von Ditherwerten einem der Schwellenwerte der genannten Dithermatrix zugeordnet ist, und all diese Ketten einer Datenkompression unterzogen werden, dadurch gekennzeichnet, daß die Datenkompression die folgenden Schritte umfaßt:
- die Bestimmung eines maximalen Schwellenwertes dₘₐₓ und eines minimalen Schwellenwertes dₘᵢₙ der Dithermatrix,
- die Zuordnung eines individuellen Codes zu jeder Kette, die zu einem Schwellenwert innerhalb des durch dₘᵢₙ und dₘₐₓ beschränkten Bereiches gehört, und
- die Zuordnung wenigstens eines Gruppencodes zu jeder der zwei Gruppen von Ketten, die zu Schwellenwerten oberhalb oder unterhalb des durch dₘᵢₙ und dₘₐₓ beschränkten Bereiches gehören.

2. Verfahren nach Anspruch 1, dadurch gekennzeichnet, daß dₘᵢₙ und dₘₐₓ anhand der Anzahl der Pixel mit einem Binärwert und der Anzahl der Pixel mit dem anderen Binärwert in den erhaltenen Ketten bestimmt werden.

3. Verfahren nach Anspruch 1 oder 2, dadurch gekennzeichnet, daß für die Zuordnung des individuellen Codes zu einer Kette diejenige Standardkette, die der zu codierenden Kette am ähnlichsten ist, aus einem Satz von Standardketten ausgewählt wird, und daß der individuelle Code eine Identifizierung der ausgewählten Standardkette enthält.

4. Verfahren nach einem der vorstehenden Ansprüche, dadurch gekennzeichnet, daß der Gruppencode für die Gruppe von Ketten, die Schwellenwerten oberhalb des durch dₘᵢₙ und dₘₐₓ beschränkten Bereiches zugeordnet sind, eine Identifizierung für dₘₐₓ enthält und der Gruppencode für die Gruppe von Ketten, die Schwellenwerten unterhalb des durch dₘᵢₙ und dₘₐₓ beschränkten Bereiches zugeordnet sind, eine Identifizierung für dₘᵢₙ enthält.

5. Vorrichtung zum Codieren digitaler Bilddaten, die durch Dithern eines Bildes mit einer Dithermatrix erhalten wurden, mit
- einer Kombiniereinrichtung (11) zum Kombinieren der binären Ditherwerte der Pixel wenigstens eines Teils des Bildes, die beim Dithern mit demselben Schwellenwert der Dithermatrix verglichen wurden, zu Ketten in einer vorgegebenen Reihenfolge, wobei jede so erhaltene Kette von Ditherwerten einem der Schwellenwerte der genannten Dithermatrix zugeordnet ist, und
- einer mit der Kombiniereinrichtung verbundenen Kompressionseinrichtung (13,14,15) zur Kompression all dieser Ketten,
dadurch gekennzeichnet, daß die Kompressionseinrichtung versehen ist mit
- einer mit der Kombiniereinrichtung verbundenen Diskriminiereinrichtung (13) zur Bestimmung eines maximalen Schwellenwertes dₘₐₓ und eines minimalen Schwellenwertes dₘᵢₙ der Dithermatrix und
- einer mit der Diskriminiereinrichtung verbundenen Codiereinrichtung (14) zur Zuordnung eines individuellen Codes zu jeder Kette, die zu einem Schwellenwert in dem durch dₘᵢₙ und dₘₐₓ beschränkten Bereich gehört und wenigstens eines Gruppencodes zu jeder der Ketten, die zu Schwellenwerten oberhalb und unterhalb des durch dₘᵢₙ und dₘₐₓ beschränkten Bereiches gehören.

6. Vorrichtung nach Anspruch 5, bei der die Diskriminiereinrichtung (13) mit Mitteln zum Zählen der Anzahl der Pixel mit dem einen Binärwert und der Anzahl der Pixel mit dem anderen Binärwert in den Ketten versehen ist und dazu eingerichtet ist, dₘᵢₙ und dₘₐₓ anhand dieser Anzahlen zu bestimmen.

7. Vorrichtung nach Anspruch 5 oder 6, bei der die Codiereinrichtung (14) mit einer Vergleichseinrichtung (15) zum Vergleich einer ersten Kette mit einer Anzahl von in einem Speicher gespeicherten Standardketten und zur Auswahl derjenigen Standardkette, die der ersten Kette am ähnlichsten ist, versehen ist und dazu eingerichtet ist, einer solchen ersten Kette einen individuellen Code zuzuordnen, der eine Identifizierung der ausgewählten Standardkette enthält.

8. Vorrichtung nach einem der Ansprüche 5, 6 und 7, bei der die Codiereinrichtung (14) dazu eingerichtet ist, jeder der Gruppen von Ketten, die Schwellenwerten oberhalb und unterhalb des durch dₘₐₓ und dₘᵢₙ beschränkten Bereiches zugeordnet sind, einen Gruppencode zuzuordnen, der eine Identifizierung von dₘₐₓ bzw. dₘᵢₙ enthält.

## Revendications

1. Procédé pour coder des informations numériques d'image obtenues par binarisation d'une image avec une matrice de seuils de tremblement (fig. 2), comprenant, pour une partie au moins (1) de l'image, la combinaison dans un ordre prédéterminé des valeurs binarisées des pixels comparées pendant la binarisation à la même valeur de seuil de la matrice de seuils de tremblement pour former des chaînes, chaque chaîne de valeurs binarisées ainsi obtenues étant associée à une des valeurs de seuil de ladite matrice de seuils de tremblement, et la soumission de toutes ces chaînes à une opération de compression, caractérisé en ce que l'opération de compression comprend :
- la détermination d'une valeur maximale de seuil dₘₐₓ et d'une valeur minimale de seuil dₘᵢₙ de la matrice de seuils de tremblement,
- l'attribution d'un code individuel à chaque chaîne associée à une valeur de seuil dans la gamme délimitée par dₘᵢₙ et dₘₐₓ, et
- l'attribution d'au moins un code de groupe à chacun des deux groupes de chaînes associés à des valeurs de seuil supérieures ou inférieures à la gamme délimitée par dₘᵢₙ et dₘₐₓ.

2. Procédé selon la revendication 1, caractérisé en ce que dₘᵢₙ et dₘₐₓ sont déterminés en se référant, dans les chaînes obtenues, au nombre de pixels de l'une des valeurs binaires et au nombre de pixels de l'autre valeur binaire.

3. Procédé selon la revendication 1 ou 2, caractérisé en ce que pour l'attribution du code individuel à une chaîne, la chaîne standard la plus semblable à la chaîne à coder est sélectionnée parmi un ensemble de chaînes standard et que le code individuel comprend une identification de la chaîne standard sélectionnée.

4. Procédé selon une quelconque des revendications précédentes, caractérisé en ce que le code de groupe du groupe de chaînes associé à des valeurs de seuil supérieures à la gamme délimitée par dₘᵢₙ et dₘₐₓ comprend une identification de dₘₐₓ et que le code de groupe du groupe de chaînes associé à des valeurs de seuil inférieures à la gamme délimitée par dₘᵢₙ et dₘₐₓ comprend une identification de dₘᵢₙ.

5. Appareil pour coder des informations numériques d'image obtenues par binarisation d'une image au moyen d'une matrice de seuils de tremblement, comprenant
- des moyens de combinaison (11) pour combiner en des chaînes, dans un ordre prédéterminé, les valeurs binarisées des pixels d'au moins une partie de l'image qui avaient été, pendant la binarisation, comparées à la même valeur de seuil de la matrice de seuils de tremblement, chaque chaîne de valeurs de binarisées ainsi obtenue étant associée à une des valeurs de seuil de ladite matrice de seuils de tremblement, et
- des moyens de compression (13, 14, 15) reliés aux moyens de combinaison (11), afin de comprimer toutes ces chaînes,
caractérisé en ce que les moyens de compression sont munis de
- moyens de discrimination (13), reliés aux moyens de combinaison, pour déterminer une valeur maximale de seuil dₘₐₓ et une valeur minimale de seuil dₘᵢₙ de la matrice de seuils de tremblement; et
- des moyens de codage (14), reliés aux moyens de discrimination, pour attribuer un code individuel à chaque chaîne associée à une valeur de seuil dans la gamme délimitée par dₘᵢₙ et dₘₐₓ et au moins un code de groupe à chacune des chaînes associées à des valeurs de seuil supérieures et inférieures à la gamme délimitée par dₘᵢₙ et dₘₐₓ.

6. appareil selon la revendication 5, caractérisé en ce que les moyens de discrimination (13) sont munis de moyens pour compter dans les chaînes le nombre de pixels d'une des valeurs binaires et le nombre de pixels de l'autre valeur binaire et sont agencés de manière à déterminer dₘᵢₙ et dₘₐₓ par référence à ces nombres.

7. Appareil selon la revendication 5 ou 6, caractérisé en ce que les moyens de codage (14) sont munis de moyens de comparaison (15) pour comparer une première chaîne à un certain nombre de chaînes standard stockées dans une mémoire et pour sélectionner dans ce nombre de chaînes standard celle qui est la plus semblable à ladite première chaîne, et sont agencés de manière à attribuer à une telle première chaîne un code individuel comprenant une identification de la chaîne standard sélectionnée.

8. Appareil selon une quelconque des revendications 5, 6 et 7, caractérisé en ce que les moyens de codage (14) sont agencés de manière à former, pour chacun des groupes de chaînes associés à des valeurs de seuil supérieures et inférieures à la gamme délimitée par dₘₐₓ et dₘᵢₙ, un code de groupe qui comprend une identification de dₘₐₓ ou de dₘᵢₙ respectivement.
